# EUROPÄISCHE PATENTANMELDUNG

(11) **EP 4 835 592 A1**
(43) Veröffentlichungstag der Anmeldung: **04.11.2026**
(21) Anmeldenummer: 25173928.0
(22) Anmeldetag: 02.05.2025
(51) Int. Cl.: G05B 19/042

(54) **STEUERUNGSSYSTEM ZUR BEWEGUNGSSTEUERUNG**

(71) Anmelder: Siemens Aktiengesellschaft, 80333 München (DE)
(72) Erfinder: Gottwald, Tom, 08297 Zwönitz (DE); Heber, Tino, 09599 Freiberg (DE); Hess, Thomas, 09212 Limbach-Oberfrohna (DE); Kosel, Norbert, 09130 Chemnitz (DE); Schönherr, Michael, 09125 Chemnitz (DE)
(74) Vertreter: Siemens Patent Attorneys

(57) **Zusammenfassung**

Die Erfindung betrifft ein Steuerungssystem (1) zur Bewegungssteuerung, umfassend:
- einen Prozessor (P) mit einer Mehrzahl von Kernen (C1,C2,...,Cn), einschließlich eines führenden Haupt-Kerns (C1) und mindestens eines folgenden Neben-Kern (C2,...,Cn), ausgestaltet zu abarbeiten von Bewegungssteuerungsaufgaben (M1,M2,...,M8),
- einen Analysator (AL) der konfiguriert ist, um eine Gesamtheit von Bewegungssteuerungsaufgaben (M1,M2,...,M8) zu analysieren, wobei die Gesamtheit von Bewegungssteuerungsaufgaben (M1,M2,...,M8) in einem Ablaufmodell (AM) als Projektdaten (PD) eines Steuerungsprojekts (Pro) vorliegen und die Projektdaten (PD) Informationen über Technologie-Objekte (TO) und deren Funktionalität umfassen, dabei ist der Analysator (AL) weiterhin ausgestaltet Hauptaufgaben (H1,H2) und Unteraufgaben (U1,U2) aus der Gesamtheit an Bewegungssteuerungsaufgaben (M1,M2,... ,M8) zu identifizieren, wobei die Unteraufgaben (U1,U2) die Eigenschaft haben parallel zur Abarbeitung der Hautaufgaben (H1,H2) in dem Haupt-Kern (C1) in dem Neben-Kern (C2) bzw. den Neben-Kernen (C2,...,Cn) abgearbeitet zu werden,
- einen Aufgabenverteiler (AV) der konfiguriert ist die Unteraufgaben (U1,U2) auf die Mehrzahl der Neben-Kerne (C2,...,Cn) gemäß dem Ablaufmodell (AM) zu verteilen; und
- einen Synchronisator (Sync), der konfiguriert ist, um die Ausführung der verteilten Unteraufgaben (U1,U2) zwischen den Kernen (C1,C2,...,Cn) zu synchronisieren, wobei der Synchronisator (Sync) weiterhin ausgestaltet ist, dass der Haupt-Kern (C1) die Gesamtverantwortung für die Synchronisation übernimmt.

## Beschreibung

Die Erfindung betrifft ein Steuerungssystem zur Bewegungssteuerung mit einem Prozessor mit einer Mehrzahl von Kernen, einschließlich eines führenden Haupt-Kerns und mindestens eines folgenden Neben-Kerns, ausgestaltet zum Abarbeiten von Bewegungssteuerungsaufgaben.

In der EP 4 254 097 A1 wird eine Industrieanlage mit einem Steuerungssystem vorgestellt.

Es ist die Aufgabe der vorliegenden Erfindung eine Leistungsfähigkeit der bekannten Steuerungssysteme zu erhöhen.

Gelöst wird diese Aufgabe durch einen Analysator der konfiguriert ist, um eine Gesamtheit von Bewegungssteuerungsaufgaben zu analysieren, wobei die Gesamtheit von Bewegungssteuerungsaufgaben in einem Ablaufmodell als Projektdaten eines Steuerungsprojekts vorliegen und die Projektdaten Informationen über Technologie-Objekte und deren Funktionalität umfassen, dabei ist der Analysator weiterhin ausgestaltet Hauptaufgaben und Unteraufgaben aus der Gesamtheit an Bewegungssteuerungsaufgaben zu identifizieren, wobei die Unteraufgaben die Eigenschaft haben parallel zur Abarbeitung der Hautaufgaben in dem Haupt-Kern in dem Neben-Kern bzw. den Neben-Kernen abgearbeitet zu werden, dabei wird ein Aufgabenverteiler der konfiguriert ist die Unteraufgaben auf die Mehrzahl der Neben-Kerne gemäß dem Ablaufmodell zu verteilen eingesetzt und ein Synchronisator, der konfiguriert ist, um die Ausführung der verteilten Unteraufgaben zwischen den Kernen zu synchronisieren, wobei der Synchronisator weiterhin ausgestaltet ist, das der Haupt-Kern die Gesamtverantwortung für die Synchronisation übernimmt.

In dem Steuerungssystem ist der Aufgabenverteiler insbesondere konfiguriert, um die Bewegungssteuerungsaufgaben basierend auf einem Projektwissen zu verteilen, wobei das Projektwissen Informationen über technologische Objekte und deren Funktionalität umfasst, einschließlich Achsen, Synchronachsen und Pfadverbunde. Im Sinne der Erfindung sind unter Pfadverbunde z.B. Achsgruppen mit zwei- oder mehrdimensionierten Abhängigkeiten zu verstehen.

Weiterhin ist der Analysator ausgestaltet, die Unteraufgaben basierend auf Datenabhängigkeiten zwischen den Bewegungssteuerungsaufgaben zu identifizieren.

Das Projektwissen umfasst die Gesamtheit der Bewegungssteuerungsaufgaben, die in einem Ablaufmodell als Projektdaten eines Steuerungsprojekts vorliegen. Diese Projektdaten enthalten Informationen über Technologie-Objekte und deren Funktionalität. Technologieobjekte modellieren den zu automatisierenden Bewegungsvorgang und können einerseits verschiedene Arten von Achsen sein mit z.B. Leitwertobjekten, Folgewertobjekte oder andererseits Kurvenscheiben oder Kurvenscheibengleichläufe oder Bahnobjekte mit zugehörigen Achsen sein.

Die Beziehungen zwischen den technologischen Objekten können auf verschiedene Weise erkannt werden:
a) Projektierte Beziehungen:
   Bei Gleichläufen werden alle als Leitwertobjekt infrage kommenden Achsen vom Anwender in einen Engineering-Tool projektiert. Bei Bahnobjekten sind die verwendeten Achsen projektiert.
b) Programmierte Beziehungen:
   Bei Gleichlaufbefehlen werden Leitwertobjekt und Folgewertobjekt explizit angegeben. Bei Kurvenscheibengleichläufen wird zusätzlich die Kurvenscheibe angegeben.

Diese Informationen über die Beziehungen zwischen den technologischen Objekten ermöglichen es dem Steuerungssystem bzw. eine in dem Steuerungssystem implementierte Firmware, Daten- und Funktionalitätsabhängigkeiten zu identifizieren und die Aufgaben entsprechend zu verteilen. Der Analysator, welcher vorzugsweise in der Firmware integriert ist, nutzt diese Informationen, um Unteraufgaben basierend auf den Daten- und Funktionalitätsabhängigkeiten zwischen den Bewegungssteuerungsaufgaben zu identifizieren. Dies ermöglicht eine effiziente Verteilung der Aufgaben auf die verfügbaren Prozessorkerne unter Berücksichtigung der technologisch-funktionalen Abhängigkeiten.

In einer Ausgestaltungsvariante ist der Aufgabenverteiler ausgestaltet, die Unteraufgaben dynamisch auf die Neben-Kerne zu verteilen basierend auf der aktuellen Verfügbarkeit der Neben-Kerne.

Der Aufgabenverteiler kann mit Hilfe des Analysators Bewegungssteuerungsaufgaben ohne Abhängigkeiten identifizieren und verteilt diese Aufgaben auf verschiedene Kerne zur parallelen Ausführung. Dies entspricht einer statischen Verteilung. Bei einer dynamischen Verteilung wird der Aufgabenverteiler zur Laufzeit neue Aufgabe ohne Abhängigkeiten für jeden Kern, der eine Aufgabe abgeschlossen hat, gesucht bzw. diese Aufgabe auf ihn verteilt und der Kern bringt diese neue Aufgabe zur Abarbeitung.

Es ist von Vorteil, wenn der Synchronisator ausgestaltet ist, Synchronisationspunkte zu definieren, an denen alle parallel ausgeführten Unteraufgaben abgeschlossen sein müssen, bevor mit der nächsten Phase der Verarbeitung fortgefahren wird. Der Synchronisator überwacht die Abhängigkeiten zwischen den Aufgaben, bei vorhandenen Abhängigkeiten steuert er das Warten, bis die Aufgabe, von der eine andere abhängig ist, abgeschlossen wurde. Weiter steuert er währenddessen das Bearbeiten von anderen unabhängigen Aufgaben, soweit vorhanden.

Der Aufgabenverteiler optimiert die Verteilung basierend auf Datenabhängigkeiten, Kernverfügbarkeit und Cache-Konfiguration. Der Synchronisator stellt sicher, dass alle Abhängigkeiten berücksichtigt werden, und definiert Synchronisationspunkte für die parallele Ausführung. Das System nutzt ein hierarchisches Ablaufmodell und kann sowohl statisch als auch dynamisch Aufgaben verteilen, was eine flexible und effiziente Nutzung der verfügbaren Ressourcen ermöglicht.

Vorteilhafterweise weist das Ablaufmodell eine hierarchische Struktur von Bewegungssteuerungsaufgaben auf. Im Ablaufmodell des Steuerungssystems werden alle Programme abgearbeitet. Das Ablaufmodell stellt eine Reihe von Ablaufebenen mit unterschiedlichen Ablaufeigenschaften bereit.

Eine weitere Optimierung wird erreicht, wenn der Aufgabenverteiler ausgestaltet ist, die Unteraufgaben basierend auf einer Cache-Konfiguration der Neben-Kerne zu verteilen.

Beim erfindungsgemäßen Verfahren zur Bewegungssteuerung in einem Mehrkernsystem, wird wie folgt vorgegangen: Analysieren einer Gesamtheit von Bewegungssteuerungsaufgaben, die in einem Ablaufmodell als Projektdaten eines Steuerungsprojekts vorliegen, wobei die Projektdaten Informationen über Technologie-Objekte und deren Funktionalität umfassen; Identifizieren von Hauptaufgaben und Unteraufgaben aus der Gesamtheit an Bewegungssteuerungsaufgaben, wobei die Unteraufgaben die Eigenschaft haben, parallel zur Abarbeitung der Hauptaufgaben in einem Haupt-Kern in mindestens einem Neben-Kern abgearbeitet zu werden Verteilen der identifizierten Unteraufgaben auf eine Mehrzahl von Neben-Kernen gemäß dem Ablaufmodell und Synchronisieren der Ausführung der verteilten Unteraufgaben zwischen dem Haupt-Kern und den Neben-Kernen, wobei der Haupt-Kern die Gesamtverantwortung für die Synchronisation übernimmt.

Das Identifizieren der Unteraufgaben basiert auf Datenabhängigkeiten zwischen den Bewegungssteuerungsaufgaben, wobei das Verteilen der Unteraufgaben vorzugsweise dynamisch basierend auf der aktuellen Verfügbarkeit der Neben-Kerne erfolgt. Es ist auch eine statische Verteilung denkbar, in der statischen Variante wird vorab eine feste Verteilung auf die Kerne in einer festen Reihenfolge festgelegt und immer so abgearbeitet. Der Vorteil dieser Verteilung ist, dass die Reihenfolge nur einmal bestimmt werden muss, nämlich abhängig von der der Synchronisation zwischen den Kernen zu festen Zeitpunkten.

Bei dieser Art der Verteilung kann man aber nicht auf Schwankungen in der Auslastung der Kerne zur Laufzeit reagieren.

In der dynamischen Variante wird zur Laufzeit für jeden Kern der eine Aufgabe abgeschlossen hat, eine neue Aufgabe gesucht, welche abgearbeitet werden kann und dann wird sie ausgeführt. Der Vorteile ist, solange verteilbare Aufgaben vorhanden sind, ist die Auslastung mehrerer Kerne zu 100% gegeben. Da die Verteilung und Reihenfolgen nach jeder abgearbeiteten Aufgabe neu bestimmt werden muss ist ebenso eine Kombinatorik aus beiden Verteilungen möglich. Demnach ist es sinnvoll, dass ein gewisser Anteil der Aufgaben statisch verteilt wird und nach Abarbeitung des statischen Anteils auf einem Kern wird der Rest der Aufgaben dynamisch verteilt.

Zusatzkriterien für die statische Verteilung, welche die Leistung beeinflussen können sein, eine Laufzeit der einzelnen Aufgaben, eine Auslastung und Taktfrequenz der verwendeten Kerne, wird z.B. auf einem Kern mit geringer Taktfrequenz ein Großteil der Aufgaben mit langer Laufzeit ausgeführt und auf einem schnelleren Kern die gleiche Anzahl Aufgaben mit weniger Laufzeit, ist der schnellere Kern viel früher fertig und hat nichts mehr zu tun, obwohl der andere Kern noch Aufgaben abarbeiten muss.

Bei einer "methodengranulare Synchronisation", wird bei der dynamischen Verteilung entschieden, welche Methode als nächstes ausgeführt wird. Hier sind verschiedene Kriterien denkbar, aktuell werden Aufgaben welche in der Kette ihrer Abhängigkeiten anstehen gewählt, aber auch über atomare Operationen werden Aufgaben gesucht, welche noch abzuarbeiten sind und keine Abhängigkeiten haben.

Verfahrensgemäß ist das Definieren von Synchronisationspunkten, an denen alle parallel ausgeführten Unteraufgaben abgeschlossen sein müssen, bevor mit der nächsten Phase der Verarbeitung fortgefahren wird, ein wichtiger Schritt.

Zusammenfassend kann gesagt werden, die vorliegende Erfindung betrifft ein Steuerungssystem zur Bewegungssteuerung in einer Mehrprozessorumgebung. Das Steuerungssystem ermöglicht eine effiziente Nutzung von Mehrkernprozessoren für Bewegungssteuerungsaufgaben, indem es Aufgaben auf mehrere Prozessorkerne verteilt und deren Ausführung synchronisiert.

Ein Vorteil des Systems besteht darin, dass es die Leistungsfähigkeit von Mehrkernprozessoren für Bewegungssteuerungsanwendungen nutzbar macht. Durch die parallele Verarbeitung von Aufgaben auf mehreren Kernen kann eine höhere Gesamtleistung erzielt werden. Dies ermöglicht beispielsweise die Steuerung einer größeren Anzahl von Achsen oder die Bewältigung komplexerer Bewegungssteuerungsszenarien innerhalb vorgegebener Zeitbeschränkungen.

Das System ist so konzipiert, dass Änderungen am Laufzeitkontext synchron vorgenommen werden können. Dies gewährleistet eine konsistente Ausführung der Bewegungssteuerungsaufgaben auch bei dynamischen Anpassungen während des Betriebs. Die Flexibilität, Änderungen zur Laufzeit vorzunehmen, ermöglicht eine bessere Anpassung an sich ändernde Anforderungen oder Betriebsbedingungen.

Das Steuerungssystem ermöglicht eine effiziente Bewegungssteuerung in einer Mehrprozessorumgebung durch das koordinierte Zusammenwirken seiner verschiedenen Komponenten. Der Gesamtablauf beginnt mit der Analyse der Bewegungssteuerungsaufgaben und endet mit deren synchronisierter Ausführung auf den verfügbaren Prozessorkernen.

Der Analysator analysiert zunächst die Gesamtheit der Bewegungssteuerungsaufgaben, die als Projektdaten in einem Ablaufmodell vorliegen. Dabei identifiziert der Analysator Hauptaufgaben und Unteraufgaben, wobei die Unteraufgaben parallel zu den Hauptaufgaben auf den Neben-Kernen abgearbeitet werden können.

Der Aufgabenverteiler nutzt die Ergebnisse dieser Analyse, um die identifizierten Unteraufgaben auf die verfügbaren Neben-Kerne zu verteilen. Diese Verteilung basiert auf dem Ablaufmodell und berücksichtigt die Eigenschaften und Anforderungen der einzelnen Aufgaben sowie die Verfügbarkeit der Prozessorkerne.

Der Synchronisator koordiniert anschließend die Ausführung der verteilten Aufgaben zwischen dem Haupt-Kern und den Neben-Kernen. Dabei definiert der Synchronisator Synchronisationspunkte, an denen alle parallel ausgeführten Unteraufgaben abgeschlossen sein müssen, bevor mit der nächsten Phase der Verarbeitung fortgefahren wird.

Die in der Zeichnung vorgestellten Diagramme veranschaulichen diesen Prozess. Der Haupt-Kern initiiert die Verteilung der Aufgaben und wartet auf Rückmeldungen von den Neben-Kernen. Die Neben-Kerne führen ihre zugewiesenen Aufgaben parallel aus und synchronisieren sich an definierten Punkten mit dem Haupt-Kern.

Ein wesentlicher Aspekt des Systems ist die Verwendung eines zyklischen Ablaufmodells als Grundlage für die implizite Verteilung der Aufgaben über zwei oder mehr Kerne. Dieses Modell ermöglicht eine effiziente und flexible Nutzung der verfügbaren Rechenressourcen.

Die parallele Verarbeitung von Unteraufgaben auf den Neben-Kernen, während der Haupt-Kern die Hauptaufgaben bearbeitet, trägt zur Steigerung der Gesamtleistung des Systems bei. Dies ermöglicht eine verbesserte Handhabung komplexer Bewegungssteuerungsszenarien oder eine größere Anzahl von steuerbaren Achsen innerhalb vorgegebener Zeitbeschränkungen.

Das Steuerungssystem kann als Computerprogrammprodukt implementiert werden, das Anweisungen umfasst, die auf einem nicht-flüchtigen, computerlesbaren Medium gespeichert sind. Wenn diese Anweisungen von einem Prozessor ausgeführt werden, veranlassen sie den Prozessor, das beschriebene Verfahren zur Bewegungssteuerung durchzuführen. Dies beinhaltet die Analyse der Bewegungssteuerungsaufgaben, die Identifikation und Verteilung von Unteraufgaben sowie die synchronisierte Ausführung auf den verfügbaren Prozessorkernen.

Durch dieses koordinierte Zusammenwirken der Komponenten ermöglicht das Steuerungssystem eine effiziente Nutzung von Mehrprozessorarchitekturen für Bewegungssteuerungsanwendungen, wobei gleichzeitig eine konsistente Benutzerschnittstelle beibehalten wird.

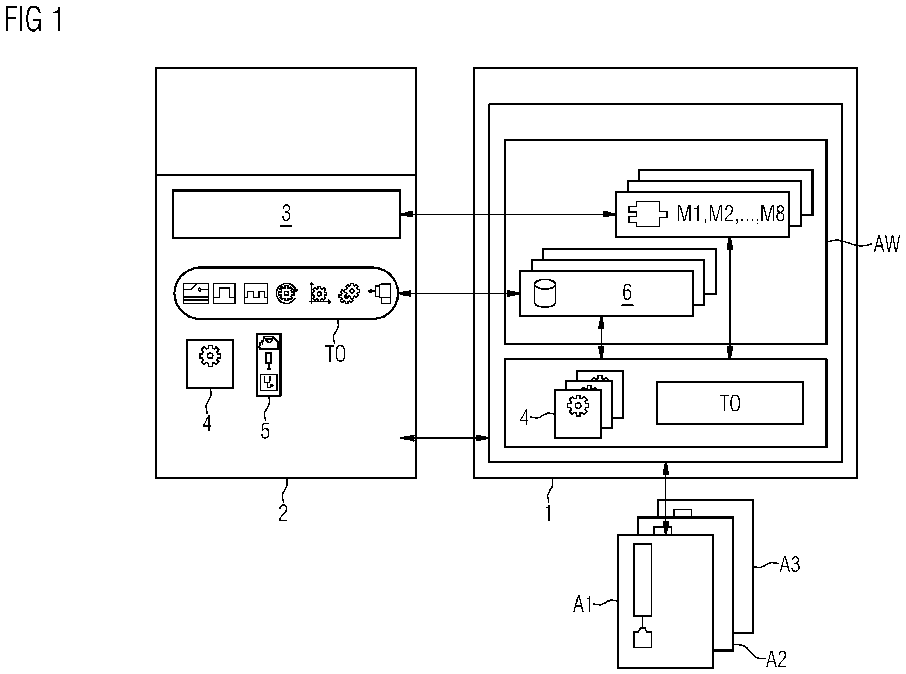

Ein Ausführungsbeispiel des erfindungsgemäßen Verfahrens und der erfindungsgemäßen Vorrichtung wird nachfolgend anhand einer Zeichnung erläutert. Dabei zeigt:
- FIG 1: ein Steuerungssystem mit Antrieben in einer Prinzipdarstellung,
- FIG 2: das Steuerungssystem mit einem Mehrkernprozessor,
- FIG 3: Projektwissen innerhalb eines Steuerungsprojekts,
- FIG 4: eine Verteilungsstrategie auf Grundlage technologischer Abhängigkeiten und
- FIG 5: Varianten von Verteilungen.
Gemäß FIG 1 ist ein Steuerungssystem 1 und ein Engineering-Tool 2 dargestellt. Das Steuerungssystem 1 ist mit seinem Engineering-Tool 2 verbunden, insbesondere für ein durchgängiges Motion-Control-System mit dem Schwerpunkt Automatisierung von Produktionsmaschinen zu erleichtern. Das Steuerungssystem 1 wird beispielsweise für Verpackungsmaschinen, Kunststoffmaschinen, Umformtechnik, Textilmaschinen, Druckmaschinen, Holz, Glas, Keramikindustrie und viele weitere industriellen Anwendungen eingesetzt. Aus dem Engineering-Tool 2 wird ein Systembaukasten bereitgestellt. Dieser Systembaukasten enthält Technologieobjekte TO, Motion-Control-Bausteine 4 und ein Konfigurations-Inbetriebnahme-Diagnose-Tool 5.

Durch diesen Systembaukasten können in dem Steuerungssystem zugehörige Technologie-Datenbausteine 6 abgelegt bzw. erzeugt werden. Mit dem Engineering-Tool 2 wird auch über eine PLC-Programmierung 3 ein Anwenderprogramm AW erzeugt, welches in dem Steuerungssystem 1 zum Ablauf gebracht wird. Der Systembaukasten in Zusammenarbeit mit einem Projekteur erzeugt zusätzlich in dem Anwenderprogramm mehrere Bewegungssteuerungsaufgaben M1,M2,...,M8.

Wird das Anwenderprogramm AW mit den Bewegungssteuerungsaufgaben M1,M2,...,M8 zum Ablauf gebracht, können ein erster Antrieb A1, ein zweiter Antrieb A2, ein dritter Antrieb A3 geregelt und gesteuert werden.

Der Systembaukasten stellt auch die Technologie-Funktionen bereit. TO-Funktion sind in erster Linie Befehle, die bestimmte Aktionen am Technologie-Objekt TO ausführen, weshalb sie auch TO-Befehle genannt werden. TO-Funktionen können vom Anwender in selbstdefinierten Funktionsbausteinen eingesetzt werden.

Mit dem Engineering-Tool 2 wurden die Bewegungssteuerungsaufgaben M1,M2,...,M8 erstellt, welche wiederum in das Steuerungssystem 1 zum Ablauf in das Anwenderprogramm integriert wurden.

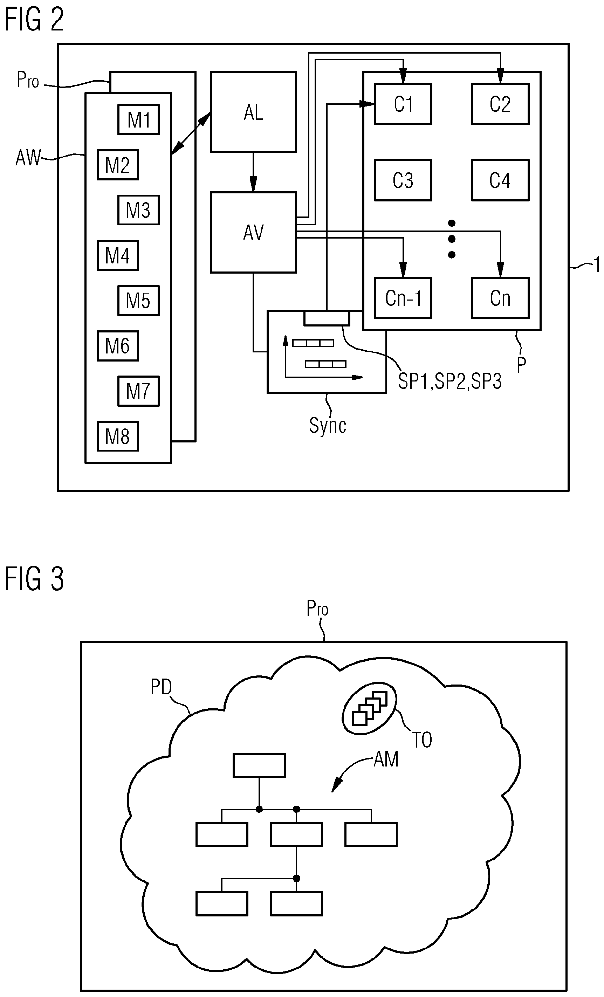

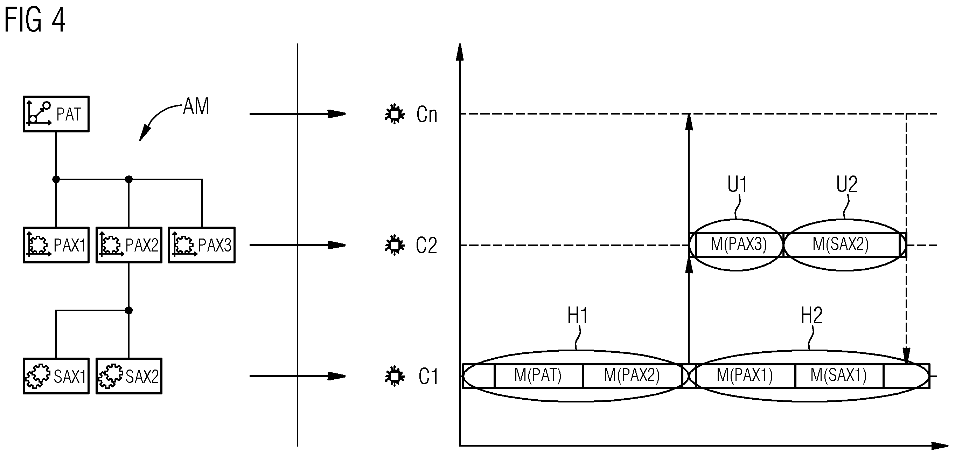

Gemäß FIG 2 ist ein Steuerungssystem 1 mit einem Prozessor P dargestellt. Der Prozessor P ist ein Mehrkernprozessor und weist dementsprechend eine Mehrzahl von Kernen C1,C2,...,Cn auf. Die Kerne C1,...,Cn umfassen einen führenden Haupt-Kern C1 und mindestens einen folgenden Neben-Kern C2. Der Prozessor P ist ausgestaltet, die Bewegungssteuerungsaufgaben M1,...,M8 abzuarbeiten. Das Steuerungssystem 1 umfasst einen Analysator AL der konfiguriert ist, um die Gesamtheit von Bewegungssteuerungsaufgaben M1,...,M8 zu analysieren, wobei die Gesamtheit von Bewegungssteuerungsaufgaben M1,...,M8 in einem Ablaufmodel AM als Projektdaten PD (siehe FIG 3) vorliegen, wobei die Projektdaten PD Informationen über die Technologie-Objekte TO und deren Funktionalität umfassen. Der Analysator AL ist weiterhin ausgestaltet, Hauptaufgaben H1,H2 und Unteraufgaben U1,U2 (siehe FIG 4) aus der Gesamtheit an Bewegungssteuerungsaufgaben M1,...,M8 zu identifizieren.

Die Unteraufgaben U1,U2 haben die Eigenschaft parallel zur Abarbeitung der Hauptaufgaben H1,H2, welche in dem Haupt-Kern C1 zum Ablauf gebracht werden, in dem Neben-Kernen C2,...,Cn abgearbeitet zu werden.

Weiterhin umfasst das Steuerungssystem 1 einen Aufgabenverteiler AV. Der Aufgabenverteiler AV ist konfiguriert die Unteraufgaben U1,U2 auf die Mehrzahl der Neben-Kerne C2,...,Cn gemäß dem Ablaufmodell AM zu verteilen und damit für eine parallele Abarbeitung von Unteraufgaben U1,U2 zu Hauptaufgaben H1,H2 zu sorgen.

Weiterhin weist das Steuerungssystem 1 einen Synchronisator Sync auf, der konfiguriert ist, um die Ausführung der verteilten Unteraufgaben U1,U2 zwischen den Kernen C1,...,Cn zu synchronisieren, wobei der Synchronisator Sync weiterhin ausgestaltet ist, dass der Haupt-Kern C1 die Gesamtverantwortung für die Synchronisation übernimmt.

Demnach stellt der Synchronisator Sync Synchronisationspunkte SP1,SP2,SP3 bereit.

Die FIG 3 zeigt in einer Prinzipdarstellung ein Steuerungsprojekt Pro, wie es mit dem Engineering-Tool 2 aus FIG 1 erstellt wurde. In dem Steuerungsprojekt Pro liegt das Ablaufmodell AM als Projektdaten PD vor. Ebenfalls sind die technologischen Objekte TO bekannt. Demnach umfasst das Projektwissen innerhalb des Steuerungsprojektes Pro die Gesamtheit der Bewegungssteuerungsaufgaben M1,...,M8 die in dem Ablaufmodell AM als Projektdaten PD des Steuerungsprojektes Pro vorliegen. Diese Projektdaten PD enthalten Informationen über die Technologie-Objekte TO und deren Funktionalität. Technologieobjekte TO können verschiedene Arten von Achsen sein, mit z.B. Leitwertobjekten, Folgewertobjekten oder Kurvenscheiben für Kurvenscheibengleichläufe oder Bahnobjekte mit zugehörigen Achsen.

Die FIG 4 zeigt eine Verteilungsstrategie von Bewegungssteuerungsaufgaben auf Grundlage der technologisch funktionalen Abhängigkeiten in dem Ablaufmodell AM. Um ein Pathobjekt PAT (Bahnobjekt) richtig zu steuern, sind Abhängigkeiten in Folge eines Bahnverbundes zu berücksichtigen. Eine erste Achspositionierung PAX1, eine zweite Achspositionierung PAX2 und eine dritte Achspositionierung PAX3 sind zu berücksichtigen. Infolge einer Gleichlauffunktionalität bestehen folgende Abhängigkeiten:
Eine erste Achssynchronisation SAX1 hängt von einer zweiten Achssynchronisation SAX2 ab.

Der mit FIG 2 gezeigte Analysator AL analysiert nun diese Abhängigkeiten und der Aufgabenverteiler AV verteilt die Aufgaben entsprechend auf die Kerne C1,...,Cn. Gemäß FIG 4 enthält der erste Kern C1, also der Haupt-Kern C1, eine erste Hauptaufgabe H1 und eine zweite Hauptaufgabe H2. In der ersten Hauptaufgabe H1 wird die Bewegungssteuerung für das Bahnobjekt M (PAT) abgearbeitet. Im Anschluss daran wird die zweite Achspositionierung PAX2 in eine Bewegungssteuerungsaufgabe M (PAX2) ausgeführt. Die Bewegungssteuerungsaufgaben M1 (PAX3) und M (SAX2) werden in einer ersten Unteraufgabe U1 und einer zweiten Unteraufgabe U2 auf dem zweiten Neben-Kern C2 aufgeteilt.

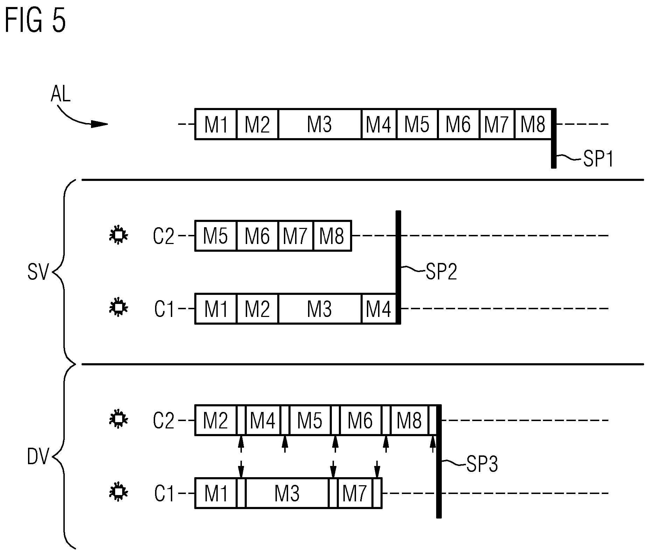

Mit der Figur 5 werden Varianten der Verteilung dargestellt. Es gibt eine Ausgangslage AL in der die Bewegungssteuerungsaufgaben M1,M2,...,M8 einfach der Reihe nach bis zu einem ersten Synchronisationspunkt SP1 abgearbeitet werden. Diese Reihenabarbeitung erfordert aber wesentlich mehr Zeit.

Daher kann man den Weg einer statischen Verteilung SV oder den Weg einer dynamischen Verteilung DV wählen. Es ist ebenfalls möglich eine Kombination aus statischer Verteilung SV und dynamischer Verteilung EV anzuwenden. Bei der statischen Verteilung haben die Unteraufgaben schlichtweg die Eigenschaft parallel zur Abarbeitung der Hauptaufgaben H1,H2 ablaufen zu können. Demzufolge werden die fünfte, die sechste, die siebte und die achte Bewegungssteuerungsaufgabe M5,M6,M7,M8 auf den zweiten Neben-Kern C2 verteilt und die Aufgaben, welche Abhängigkeiten besitzen, nämlich die erste, die zweite, die dritte und die vierte Bewegungssteuerungsaufgabe M1,M2,M3,M4 werden auf dem Haupt-Kern C1 bis zu einem zweiten Synchronisationspunkt SP2 abgearbeitet.

Es ist aber auch möglich, für eine dynamische Verteilung, das Identifizieren der Unteraufgaben U1,U2 basierend auf der Datenabhängigkeit zwischen den Bewegungssteuerungsaufgaben M1,...,M8 durchzuführen. Dabei wird das Verteilen der Unteraufgaben dynamisch, basierend auf der aktuellen Verfügbarkeit der Neben-Kerne C2,...,Cn durchgeführt. In der dynamischen Verteilungsvariante wird zur Laufzeit für jeden Neben-Kern C2,...,Cn der eine Aufgabe abgeschlossen hat, eine neue Aufgabe gesucht, welche abgearbeitet werden kann und dann wird sie ausgeführt. Vorteil ist, solange verteilbare Aufgaben vorhanden sind, ist die Auslastung mehrerer Kerne zu 100% gegeben und das System wird im Ganzen perfomanter.

## Patentansprüche

1. Steuerungssystem (1) zur Bewegungssteuerung, umfassend:
- einen Prozessor (P) mit einer Mehrzahl von Kernen (C1,C2,...,Cn), einschließlich eines führenden Haupt-Kerns (C1) und mindestens eines folgenden Neben-Kern (C2,...,Cn), ausgestaltet zu abarbeiten von Bewegungssteuerungsaufgaben (M1,M2,...,M8),
- einen Analysator (AL) der konfiguriert ist, um eine Gesamtheit von Bewegungssteuerungsaufgaben (M1,M2,...,M8) zu analysieren, wobei die Gesamtheit von Bewegungssteuerungsaufgaben (M1,M2,...,M8) in einem Ablaufmodell (AM) als Projektdaten (PD) eines Steuerungsprojekts (Pro) vorliegen und die Projektdaten (PD) Informationen über Technologie-Objekte (TO) und deren Funktionalität umfassen, dabei ist der Analysator (AL) weiterhin ausgestaltet Hauptaufgaben (H1,H2) und Unteraufgaben (U1,U2) aus der Gesamtheit an Bewegungssteuerungsaufgaben (M1,M2,... ,M8) zu identifizieren, wobei die Unteraufgaben (U1,U2) die Eigenschaft haben parallel zur Abarbeitung der Hautaufgaben (H1,H2) in dem Haupt-Kern (C1) in dem Neben-Kern (C2) bzw. den Neben-Kernen (C2,...,Cn) abgearbeitet zu werden,
- einen Aufgabenverteiler (AV) der konfiguriert ist die Unteraufgaben (U1,U2) auf die Mehrzahl der Neben-Kerne (C2,...,Cn) gemäß dem Ablaufmodell (AM) zu verteilen; und
- einen Synchronisator (Sync), der konfiguriert ist, um die Ausführung der verteilten Unteraufgaben (U1,U2) zwischen den Kernen (C1,C2,...,Cn) zu synchronisieren, wobei der Synchronisator (Sync) weiterhin ausgestaltet ist, dass der Haupt-Kern (C1) die Gesamtverantwortung für die Synchronisation übernimmt.

2. Steuerungssystem (1) nach Anspruch 1, wobei der Analysator (AL) ausgestaltet ist, die Unteraufgaben (U1,U2) basierend auf Datenabhängigkeiten zwischen den Bewegungssteuerungsaufgaben (M1,M2,...,M8) zu identifizieren.

3. Steuerungssystem (1) nach Anspruch 1 oder 2, wobei der Aufgabenverteiler (AV) ausgestaltet ist, die Unteraufgaben (U1,U2) dynamisch auf die Neben-Kerne (C2,...,Cn) zu verteilen basierend auf der aktuellen Verfügbarkeit der Neben-Kerne (C2,...,Cn).

4. Steuerungssystem (1) nach einem der Ansprüche 1 bis 3, wobei der Synchronisator (Sync) ausgestaltet ist, Synchronisationspunkte (SP1,SP2) zu definieren, an denen alle parallel ausgeführten Unteraufgaben (U1,U2) abgeschlossen sein müssen, bevor mit der nächsten Phase der Verarbeitung fortgefahren wird.

5. Steuerungssystem (1) nach einem der Ansprüche 1 bis 4, wobei das Ablaufmodell (AM) eine hierarchische Struktur von Bewegungssteuerungsaufgaben (M1,M2,...,M8) umfasst.

6. Steuerungssystem (1) nach einem der Ansprüche 1 bis 5, wobei der Aufgabenverteiler (AV) ausgestaltet ist, die Unteraufgaben (U1,U2) basierend auf einer Cache-Konfiguration der Neben-Kerne (C2,...,Cn) zu verteilen.

7. Verfahren zur Bewegungssteuerung in einem Mehrkernsystem, umfassend:
- Analysieren einer Gesamtheit von Bewegungssteuerungsaufgaben (M1, M2,...,M8), die in einem Ablaufmodell (AM) als Projektdaten (PD) eines Steuerungsprojekts (Pro) vorliegen, wobei die Projektdaten (PD) Informationen über Technologie-Objekte (TO) und deren Funktionalität umfassen;
- Identifizieren von Hauptaufgaben (H1,H2) und Unteraufgaben (U1,U2) aus der Gesamtheit an Bewegungssteuerungsaufgaben (M1,M2,...,M8), wobei die Unteraufgaben (U1,U2) die Eigenschaft haben, parallel zur Abarbeitung der Hauptaufgaben (H1,H2) in einem Haupt-Kern (C1) in mindestens einem Neben-Kern (C2,...,Cn) abgearbeitet zu werden;
- Verteilen der identifizierten Unteraufgaben (U1, U2) auf eine Mehrzahl von Neben-Kernen (C2,...,Cn) gemäß dem Ablaufmodell (AM); und
- Synchronisieren der Ausführung der verteilten Unteraufgaben (U1, U2) zwischen dem Haupt-Kern (C1) und den Neben-Kernen (C2,...,Cn), wobei der Haupt-Kern (C1) die Gesamtverantwortung für die Synchronisation übernimmt.

8. Verfahren nach Anspruch 7, wobei das Identifizieren der Unteraufgaben (U1,U2) auf Datenabhängigkeiten zwischen den Bewegungssteuerungsaufgaben (M1,M2,...,M8) basiert.

9. Verfahren nach Anspruch 7 oder 8, wobei das Verteilen der Unteraufgaben (U1,U2) dynamisch basierend auf der aktuellen Verfügbarkeit der Neben-Kerne (C2,...,Cn) erfolgt.

10. Verfahren nach einem der Ansprüche 7 bis 9, weiterhin umfassend das Definieren von Synchronisationspunkten, an denen alle parallel ausgeführten Unteraufgaben (U1, U2) abgeschlossen sein müssen, bevor mit der nächsten Phase der Verarbeitung fortgefahren wird.

11. Verfahren nach einem der Ansprüche 7 bis 10, wobei das Ablaufmodell (AM) eine hierarchische Struktur von Bewegungssteuerungsaufgaben (M1,M2,...,M8) umfasst.

12. Verfahren nach einem der Ansprüche 7 bis 11, wobei das Verteilen der Unteraufgaben (U1,U2) auf einer Cache-Konfiguration der Neben-Kerne (C2,...,Cn) basiert.

13. Computerprogrammprodukt zur Bewegungssteuerung, umfassend auf einem nicht-flüchtigen, computerlesbaren Medium gespeicherte Anweisungen, die, wenn sie von einem Prozessor ausgeführt werden, den Prozessor veranlassen, das Verfahren nach einem der Ansprüche 7 bis 12 durchzuführen.

14. Computerprogrammprodukt nach Anspruch 13, wobei die Anweisungen weiterhin den Prozessor veranlassen, die Unteraufgaben (U1,U2) basierend auf Datenabhängigkeiten zwischen den Bewegungssteuerungsaufgaben (M1,M2,...,M8) zu identifizieren.

15. Computerprogrammprodukt nach Anspruch 13 oder 14, wobei die Anweisungen weiterhin den Prozessor veranlassen, die Unteraufgaben (U1, U2) dynamisch auf die Neben-Kerne (C2,...,Cn) zu verteilen basierend auf der aktuellen Verfügbarkeit der Neben-Kerne (C2,... ,Cn).
